# EUROPEAN PATENT SPECIFICATION

(11) **EP 1 375 891 B1**
(45) Date of publication and mention of the grant of the patent: **30.03.2005**
(21) Application number: 03078000.1
(22) Date of filing: 14.07.1998
(51) Int. Cl.: F02G 1/043, F02G 1/055, F23R 3/28, F23C 7/00

(54) **Intake manifold for a stirling engine**
Einlass- System für eine Stirlingmaschine
Collecteur pour un moteur Stirling

(30) Priority: 15.07.1997 US 52535 P
(43) Date of publication of application: 02.01.2004
(62) Divisional of application: 98935660.5
(73) Proprietor: New Power Concepts LLC, Manchester, NH 03101 (US)
(72) Inventor: Kerwin, John, Weston, MA 02193 (US); Norris, Michael, Manchester, NH 03104 (US); Owens, Kingston, Bedford, NH 02110 (US); Kamen, Dean L., Bedford, NH 03110 (US); Duggan, Tim, Epson, NH 03234 (US); Langenfeld,, Christopher C., Nashua, NH 03063 (US)
(74) Representative: Greene, Simon Kenneth

(56) References cited:
- EP-A- 0 735 318
- US-A- 3 269 658
- US-A- 3 851 466
- US-A- 4 069 671
- US-A- 5 511 375

## Description

### Technical Field

The present invention pertains to improvements to a Stirling cycle heat engine or refrigerator and more particularly to improvements relating to mechanical and thermal components of a Stirling cycle heat engine or refrigerator which contribute to increased engine operating efficiency and lifetime, and to reduced size, complexity and cost.

### Background of the Invention

Stirling cycle machines, including engines and refrigerators, have a long technological heritage, described in detail in Walker, *Stirling Engines*, Oxford University Press (1980), incorporated herein by reference. The principle underlying the Stirling cycle engine is the mechanical realization of the Stirling thermodynamic cycle: isovolumetric heating of a gas within a cylinder, isothermal expansion of the gas (during which work is performed by driving a piston), isovolumetric cooling, and isothermal compression. The Stirling cycle refrigerator is also the mechanical realization of a thermodynamic cycle which approximates the ideal Stirling thermodynamic cycle. In an ideal Stirling thermodynamic cycle, the working fluid undergoes successive cycles of isovolumetric heating, isothermal expansion, isovolumetric cooling and isothermal compression. Practical realizations of the cycle, wherein the stages are neither isovolumetric nor isothermal, are within the scope of the present invention and may be referred to within the present description in the language of the ideal case without limitation of the scope of the invention as claimed.

Various aspects of the present invention apply to both Stirling cycle engines and Stirling cycle refrigerators, which are referred to collectively as Stirling cycle machines in the present description and in any appended claims. Additional aspects of Stirling cycle machines and improvements thereto are discussed in a co-pending U.S. patent application entitled "Stirling Cycle Machine Improvements," filed July 14, 1998.

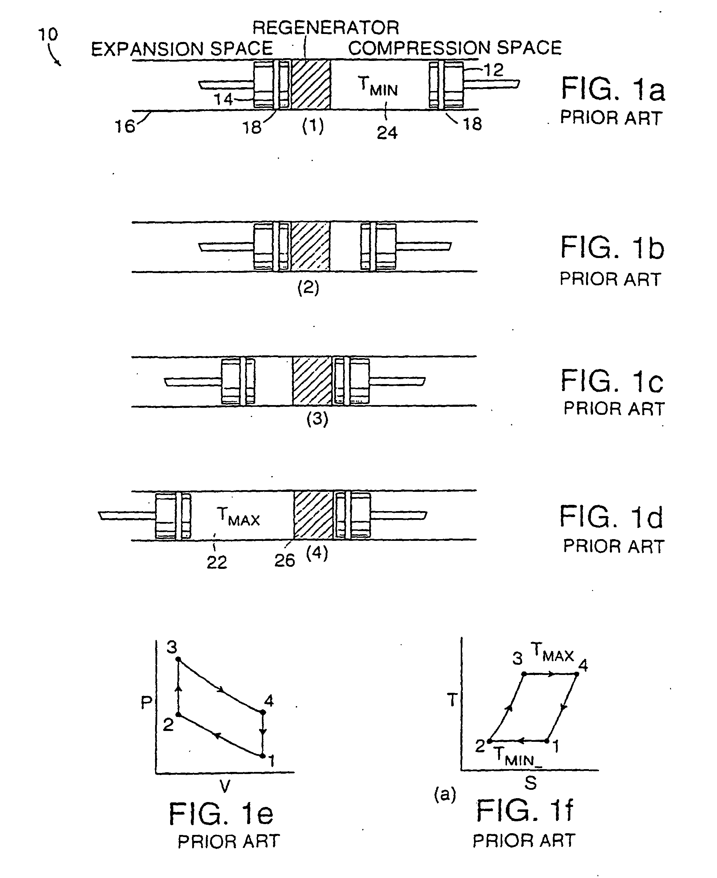

The principle of operation of a Stirling cycle engine is readily described with reference to FIGS. 1a-1f, wherein identical numerals are used to identify the same or similar parts. Many mechanical layouts of Stirling cycle engines are known in the art, and the particular Stirling engine designated generally by numeral **10** is shown merely for illustrative purposes. In FIGS. 1a to 1d, a piston **12** (otherwise referred to herein as a compression piston") and a second piston (also known as an "expansion piston") **14** move in phased reciprocating motion within cylinder **16**. Compression piston **12** and expansion piston **14** may also move within separate, interconnected, cylinders. Piston seals **18** prevents the flow of a working fluid contained within cylinder **16** between piston **12** and piston **14** from escaping around either piston **12**. The working fluid is chosen for its thermodynamic properties, as discussed in the description below, and is typically helium at a pressure of several atmospheres. The volume of fluid governed by the position of expansion piston **14** is referred to as expansion space **22**. The volume of fluid governed by the position of compression piston **12** is referred to as compression space **24.** In order for fluid to flow between expansion space **22** and compression space **24**, whether in the configuration shown or in another configuration of Stirling engine **10**, the fluid passes through regenerator **26**. Regenerator **26** is a matrix of material having a large ratio of surface area to volume which serves to absorb heat from the working fluid when the fluid enters hot from expansion space **22** and to heat the fluid when it passes from compression space **24** returning to expansion space **22**.

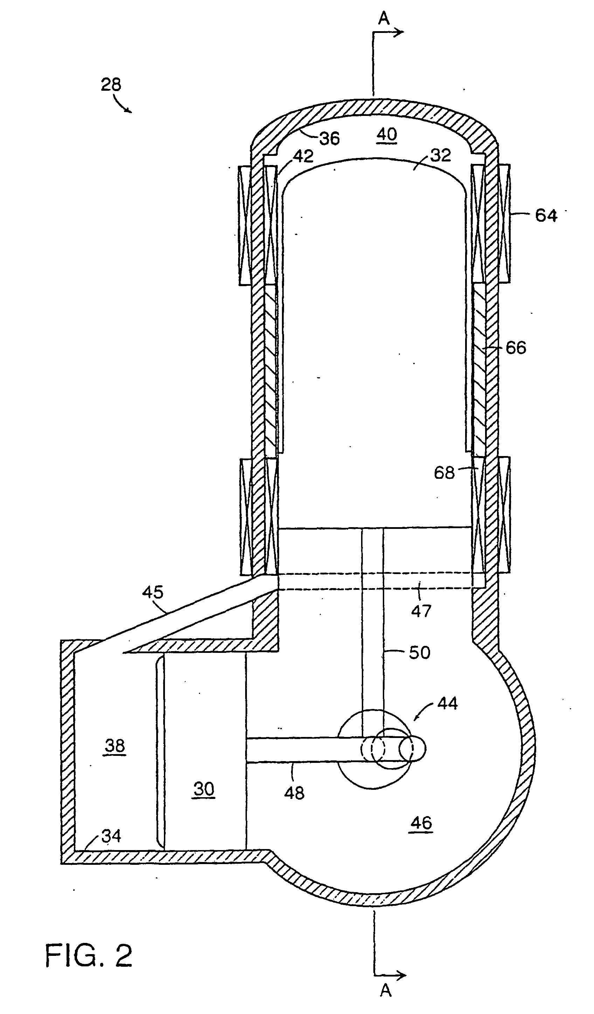

During the first phase of the engine cycle, the starting condition of which is depicted in FIG. 1a, piston **12** compresses the fluid in compression space **24.** The compression occurs at a constant temperature because heat is extracted from the fluid to the ambient environment. In practice, a cooler 68 (shown in FIG. 2) is provided, as will be discussed in the description below.
The condition of engine **10** after compression is depicted in FIG. 1b. During the second phase of the cycle, expansion piston **14** moves in synchrony with compression piston **12** to maintain a constant volume of fluid. As the fluid is transferred to expansion space **22**, it flows through regenerator **26** and acquires heat from regenerator **26** such that the pressure of the fluid increases. At the end of the transfer phase, the fluid is at a higher pressure and is contained within expansion space **22,** as depicted in FIG. 1c.

During the third (expansion) phase of the engine cycle, the volume of expansion space **22** increases as heat is drawn in from outside engine **10**, thereby converting heat to work. In practice, heat is provided to the fluid in expansion space **22** by means of a heater **64** (shown in FIG. 2) which is discussed in greater detail in the description below. At the end of the expansion phase,
the hot fluid fills the full expansion space **22** as depicted in FIG. I d. During the fourth phase of the engine cycle, the fluid is transferred from expansion space **22** to compression space **24**, heating regenerator **26** as the fluid passes through it. At the end of the second transfer phase, the fluid is in compression space **24**, as depicted in FIG. 1a, and is ready for a repetition of the compression phase. The Stirling cycle is depicted in a P-V (pressure-volume) diagram as shown in FIG. le and in a T-S (temperature -entropy) diagram as shown in FIG. lf. The Stirling cycle is a closed cycle in that the working fluid is typically not replaced during the course of the cycle.

The principle of operation of a Stirling cycle refrigerator can also be described with reference to FIGS. 1a-1e, wherein identical numerals are used to identify the same or similar parts. The differences between the engine described above and a Stirling machine employed as a refrigerator are that compression volume **22** is typically in thermal communication with ambient temperature and expansion volume **24** is connected to an external cooling load (not shown). Refrigerator operation requires net work input.

Stirling cycle engines have not generally been used in practical applications, and Stirling cycle refrigerators have been limited to the specialty field of cryogenics, due to several daunting engineering challenges to their development. These involve such practical considerations as efficiency, vibration, lifetime, and cost. The instant invention addresses these considerations.

As used in this description and in any appended claims, the term "harmonic drive" will refer to a drive arrangement employing a gear set to interconvcrt rotary and sinusoidal linear motion. A harmonic crank drive has been applied to a diesel engine (as described by Moeller, "Prime Movers for Series Hybrid Vehicles," (Society of Automotive Engineers, Inc., 1997) and to a single piston of a Stirling engine, as described by Bartolini and Caresana, "A New Small Stirling Engine Prototype for Auxiliary Employements [sic] Aboard," (ASME, 1995). The single-piston embodiment of Bartolini and Caresana, however, suffers from a dynamic imbalance that may lead to inefficient operation and wear.

An intake system for a burner having an air swirler and a control injector is disclosed in EP-A-735 318.

### Summary of the Invention

In accordance with one aspect, in one of its embodiments, there is provided a machine such as Stirling cycle engine. The machine has two pistons, each having a connecting rod and each undergoing reciprocating linear motion along respective rod axes within respective cylinders and each having a displacement with respect to fiducial points along the respective rod axes, the fiducial points fixed with respect to the respective cylinders. The second rod axis lies in a first plane parallel to the first rod axis and in a second plane forming an angle with respect to the first rod axis. Additionally, the machine has a harmonic drive linkage characterized by a net angular momentum. The harmonic drive linkage is coupled to the first and second connecting rods in such a manner that the displacement of the first piston along the first rod axis is a sinusoidal function of a crank angle and the displacement of the second piston along the second rod axis is a sinusoidal function of the crank angle, the displacement of the second piston being shifted in phase with respect to the displacement of the first piston along the first rod axis, the phase shift substantially equal to the angle between the second plane and the first rod axis. Finally, the machine has a working fluid contained within the first and second cylinders, the working fluid undergoing successive closed cycles of heating, expansion, cooling and compression.

In accordance with alternate embodiments, the linkage may have a primary crankshaft, an eccentric crankshaft disposed internally to the primary crankshaft, the eccentric crankshaft coupled to both the first connecting rod and the second connecting rod, and an epicyclic gear set coupling the eccentric crankshaft to the primary crankshaft in such a manner that the eccentric crankshaft and the primary crankshaft counterrotate. Alternatively, an eccentric crankshaft may be coupled to both the first connecting rod and the second connecting rod adjacent to the cantilevered end, and an epicyclic gear set may be disposed distally to the cantilevered end, the epicyclic gear coupling the eccentric crankshaft to the primary crankshaft in such a manner that the eccentric crankshaft is characterized by a forward angular momentum and the primary crankshaft is characterized by a backward angular momentum. The linkage may also have a flywheel coupled to the eccentric shaft such that the net angular momentum of the harmonic drive linkage is substantially zero.

In accordance with further alternate embodiments, the machine may also have a generator coupled to the primary crankshaft for converting mechanical to electrical energy and a processor for controlling a current load on the generator in such a manner as to provide a substantially constant torque on the primary crankshaft. The first and second connecting rods may be flexible with respect to bending in a direction transverse to the respective rod axes.

In accordance with yet further embodiments, the machine may also have a heat exchanger for transferring thermal energy across a manifold from a first fluid to a second fluid, the heat exchanger comprising a plurality of pins extending from the manifold into the first and/or second fluid.

In accordance with the present invention, there is provided an intake manifold for combining air and fuel according to claim 1.

### Brief Description of the Drawings

The invention will be more readily understood by reference to the following description, taken with the accompanying drawings, in which:
FIGS. **1a-1e** depict the principle of operation of a prior art Stirling cycle machine;
FIG. **2** is a side view in cross section of a Stirling cycle engine;
FIG. **3** is a schematic diagram in cross-section of an epicyclic gear set for coupling the reciprocating linear motions of a compression piston and expansion piston;
FIGS. **4a-4h** depict the principle of operation of a Stirling cycle machine with eccentric linkage-coupled drive rods;
FIG. **5a** is a perspective view of a novel L-linkage drive employed for coupling the orthogonal linear motion of two pistons of a Stirling cycle machine;
FIG. **5b** is a side view in cross section of the L-linkage drive of FIG. 5a showing torsional counterweights;
FIG. **6a** is a top view in cross-section of a Stirling cycle machine employing a novel linkage for coupling the orthogonal linear motion of two pistons.
FIG. **6b** is a side view in cross-section of the Stirling cycle machine of FIG. 6a employing the novel linkage for coupling the orthogonal linear motion of two pistons;
FIG. **7a** is a cross-section through line AA of Fig. 2 of a Stirling cycle engine showing a cantilevered crankshaft;
FIG. **7b** is a cross-section through line AA of Fig. 2 of a Stirling cycle engine showing a cantilevered crankshaft wherein the flywheel is disposed at the end of the eccentric crankshaft distal to the engine cylinders;
FIG. **8a** is a cross-sectional view of a Stirling cycle engine employing a pin heat exchanger;
FIG. **8b** is a magnified perspective detail view of the pin heat exchanger of FIG. 8a;
FIG. **9a** is a perspective view from the bottom of the Stirling cycle engine of Fig. 2, showing branching ducts for enhancing flow uniformity;
FIG. **9b** is a planar view of the system of branching ducts of FIG. 9a;
FIG. **10a** shows a cross-sectional view from the side of a fuel intake manifold for a Stirling cycle engine in accordance with a preferred embodiment of the invention;
FIG.**10b** shows a cross sectional view from the top of the fuel intake manifold of Fig. 10a taken through cut BB;
FIG.**10c** is a cross sectional view from the top of the fuel intake manifold of Fig. 10a taken through cut AA, showing the fuel jet nozzles.

### Detailed Description of Preferred Embodiments

Referring now to FIG. 2, a Stirling cycle engine, shown in cross-section, is designated generally by numeral **28**. While the invention will be described generally with reference to the Stirling engine shown in FIG. 2, it is to be understood that many engines as well as refrigerators may similarly benefit from various embodiments and improvements which are subjects of the present invention. The configuration of Stirling engine **28** shown in FIG. 2 is referred to as an alpha configuration, characterized in that compression piston **30** and expansion piston **32** undergo linear motion within respective and distinct cylinders: compression piston **30** in compression cylinder **34** and expansion piston **32** in expansion cylinder **36**.

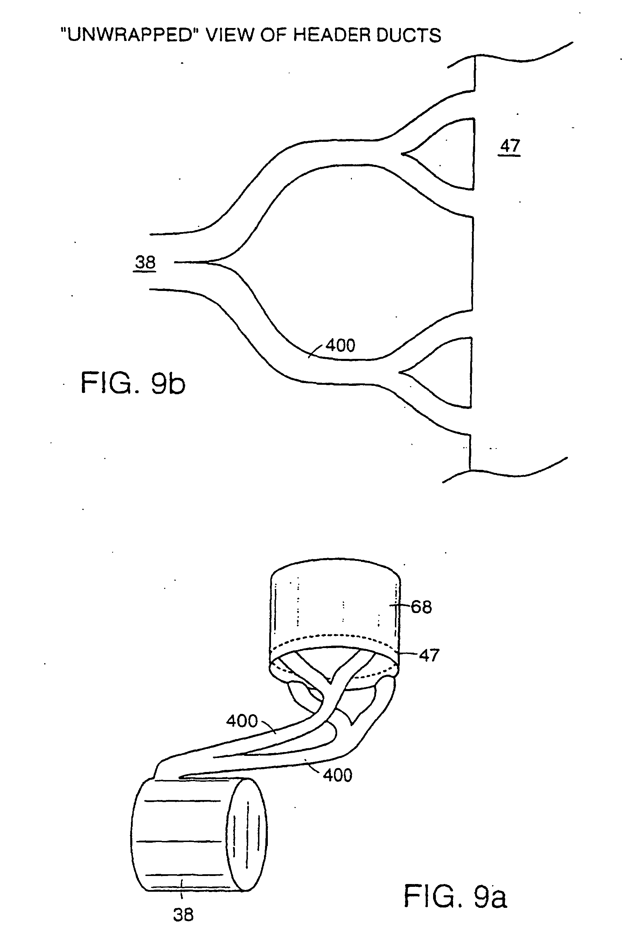

In addition to compression piston **30** and expansion piston **32**, the main components of Stirling engine **28** include heater **64**, regenerator **66**, and cooler **68**. Compression piston **30** and expansion piston **32**, referred to collectively as pistons, are constrained to move in reciprocating linear motion within respective volumes **38** and **40**. A cylinder liner **42** may line the respective cylinder surfaces. The volumes of the cylinder interior proximate to the heater **64** and cooler **68** will be referred to, herein, as hot and cold sections, respectively, of engine **28**. The relative phase (the "phase angle") of the reciprocating linear motion of compression piston **30** and expansion piston **32** is governed by their respective coupling to drive mechanism **44** housed in crankcase **46**. Drive mechanism **44**, discussed in greater detail below, is one example of various mechanisms known in the art of engine design which may be employed to govern the relative timing of pistons and to interconvert linear and rotary motion. Compression piston **30** and expansion piston **32** are coupled, respectively, to drive mechanism **44** via a first connecting rod **48** and a second connecting rod **50**. The volume **38** of compression cylinder **34** is coupled to cooler **68** via duct **45** to allow cyclic cooling of working fluid. Duct **45**, more particularly, couples compression volume **38** to the annular heat exchangers comprising cooler **68**, regenerator **66**, and heater **64**. Branching of flow between duct **45** and annular plenum **47** is discussed below with reference to Fig. 9.

Rods **48** and **50** may be fabricated with flexibility with respect to bending so as to accommodate drive misalignments (such as may arise due to pressurization and heating of the engine structure) while providing sufficient tensile and contractile stiffness to carry the requisite compressive loads without buckling. Rods **48** and **50** are preferredly fashioned from a high-strength metal, such as S-7 tool steel, for example; and are advantageously of ellipsoidal cross-section, although rods of any cross-section are possible.

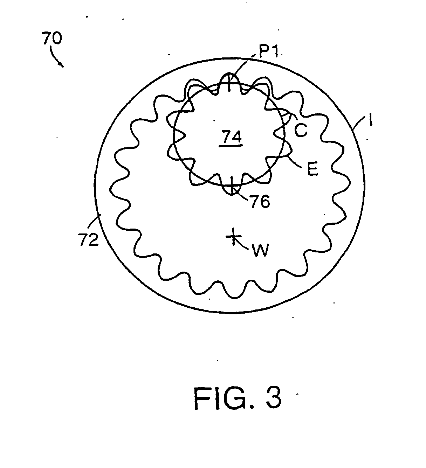

The operation of drive mechanism **44** is now discussed with reference to Fig. 3. A linkage (which may be referred to as an "L-drive" linkage) is provided for coupling two members undergoing sinusoidal linear motion with a relative phase lag. An epicyclic gear set is designated generally by numeral **70**. Epicyclic gear set **70** may be employed in accordance with an embodiment of the present invention for coupling the reciprocating linear motions of pistons **12** and **14** (shown in FIG. 1), referred to alternatively as compression piston **12** and expansion piston **14**. Epicyclic gear set **70** consists of an internal gear **72** and a pinion gear **74**, with the pitch diameter of internal gear **72** equal to twice the pitch diameter of pinion gear **74**. When internal gear **72** remains fixed and pinion gear **74** is allowed to turn inside internal gear **72,** each point on perimeter **76** of pinion gear **74** travels along a straight line with pure sinusoidal motion with respect to a fiducial point on the line.

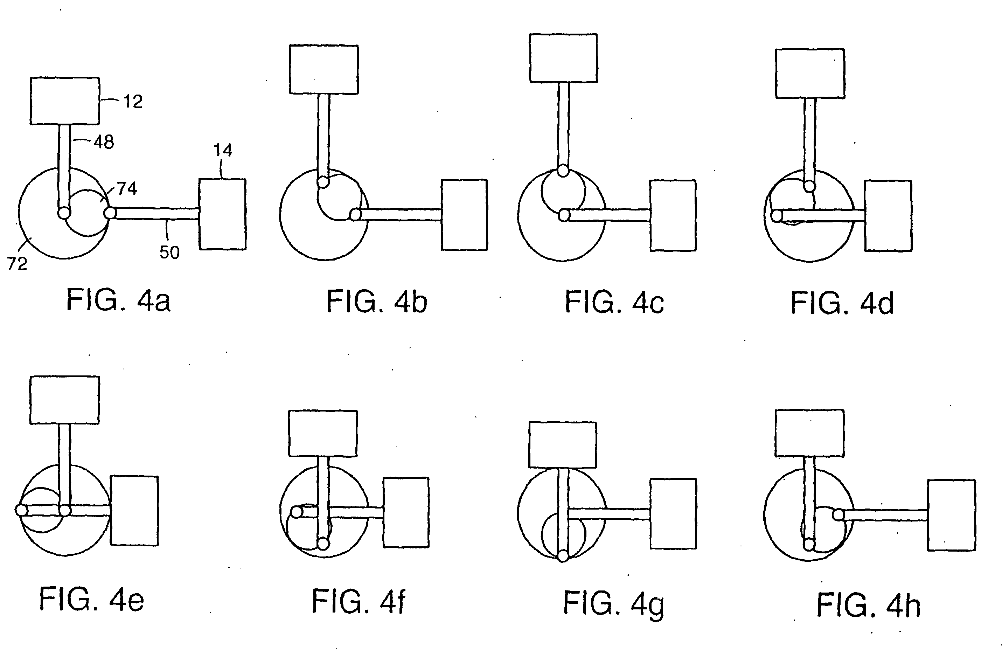

FIGS. 4a-4h show the respective linear travel of pistons **12** and **14** coupled via connecting rods **48** and **50** to opposite sides of pinion gear **74** turning with respect to fixed internal gear **72** as described in reference to FIG. 3. Pistons **12** and **14** move at an angle to each other, preferentially an angle within approximately 10° of perpendicular. Pistons **12** and **14** sweep out pure sinusoidal linear motion in a phase-angle relation substantially equal to the angular orientation of the axes of piston motion with respect to each other. Thus, for example, for piston travel oriented precisely orthogonally, pistons **12** and **14** move substantially in quadrature (90° out-of-phase) with respect to one another. Successive phases of the motion of pistons **12** and **14** with rotation of pinion gear 74 are shown in FIGS. 4a-4h.

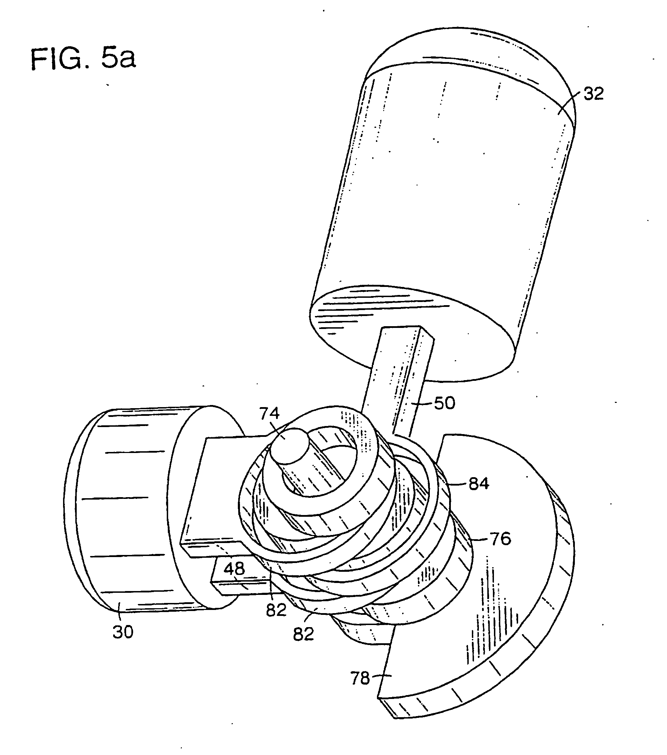

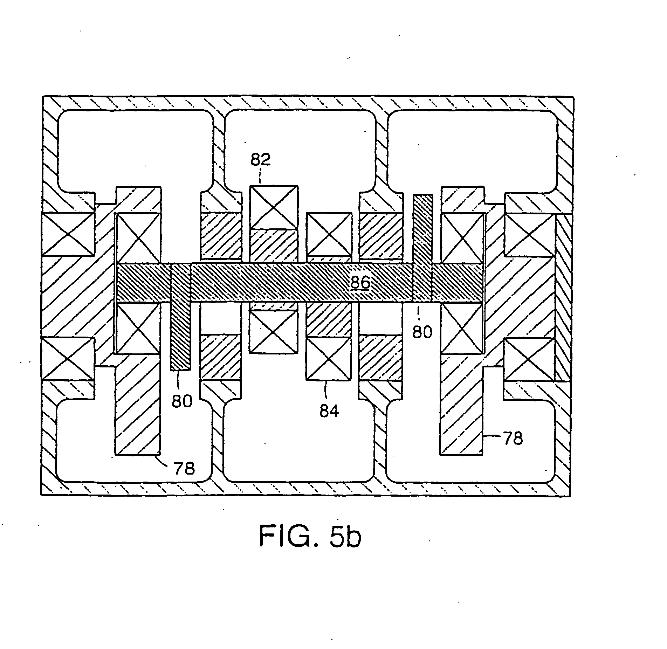

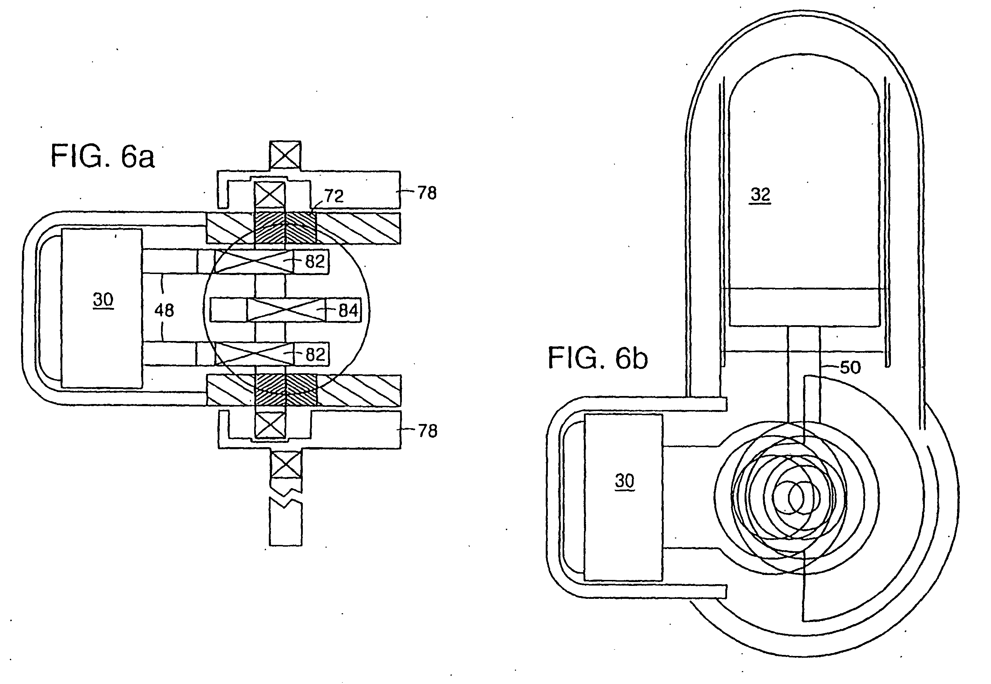

Referring now to FIG. 5a, the use of a counterweight **78** rotating 180° out of phase with pinion gear **74** allows the engine to be dynamically balanced. Referring to the cross-sectional view of the drive shown in FIG. 5b, it is not necessary to load the drive symmetrically about its center line provided that a set of "torsional counterweights" **80** are added about the axis of eccentric crankshaft **86**. The set of two opposing counterweights **80**, provided in addition to primary counterweight **78**, may balance the moments created by the offset pistons while primary counterweight **78** balance the engine in translation. In the embodiment depicted in perspective in FIG. 5a and in cross-sectional top and side views in FIGS. 5b, 6a and 6b, counterweights **78** are provided to rotate in counterphase to compression piston bearings **82** and expansion piston bearing **84** respectively. The linkage drive embodiments require far fewer parts than a rhombic drive mechanism, described in further detail below. Additionally, the volume displaced by the novel linkage drive is smaller than the volume of the displacement of a rhombic drive with the same piston stroke.
Additionally, the sinusoidal motion of the two perpendicular pistons may be perfectly balanced with a simple counterweight, and does not put side loads on the piston seals, thereby reducing friction, increasing engine lifetime, and allowing dry operation.

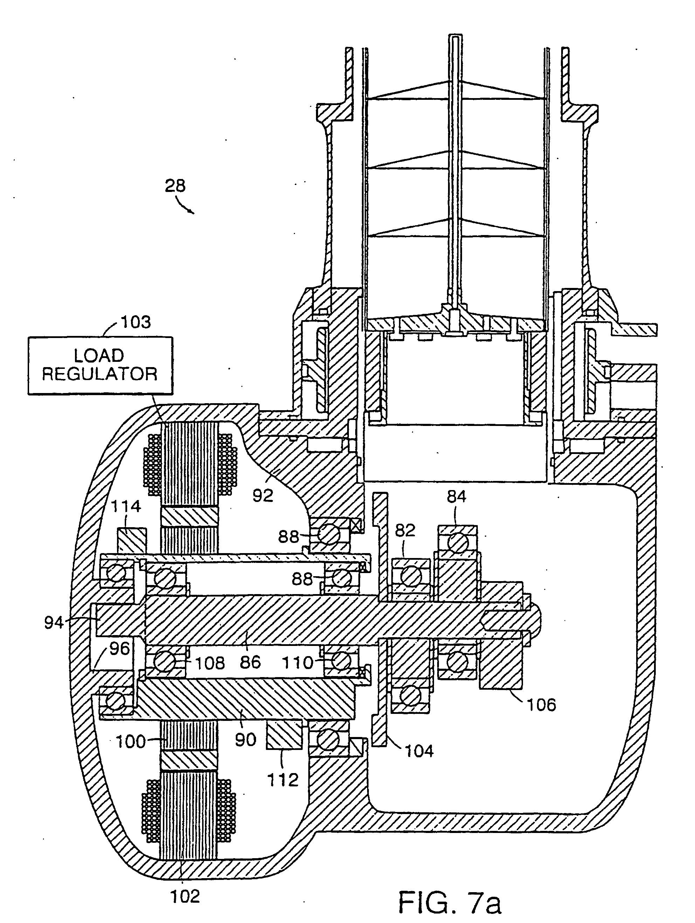

Referring now to FIG. **7a**, a cross-sectional view is shown of Stirling engine **28** taken along cut **AA** of FIG. 2. Eccentric compression piston bearings **82** and expansion piston bearing **84** are disposed about eccentric crankshaft **86** as cantilevered from main bearing set **88** which supports primary (or "outer") crankshaft **90** with respect to the housing **92** of engine **28**. Eccentric crankshaft **86** rotates about an axis eccentric to primary crankshaft **90**, driving primary crankshaft **90** in an opposite sense of rotation, at the same speed of rotation, by virtue of pinion gear **94** and internal gear **96**, together comprising epicyclic gear set **98**, as described with reference to FIG. 3. The position of primary crankshaft **90** with respect to an arbitrary point fixed with respect to the engine defines a ''crank angle." Crankshafts configured in this manner may be referred to as "harmonic crankshafts."

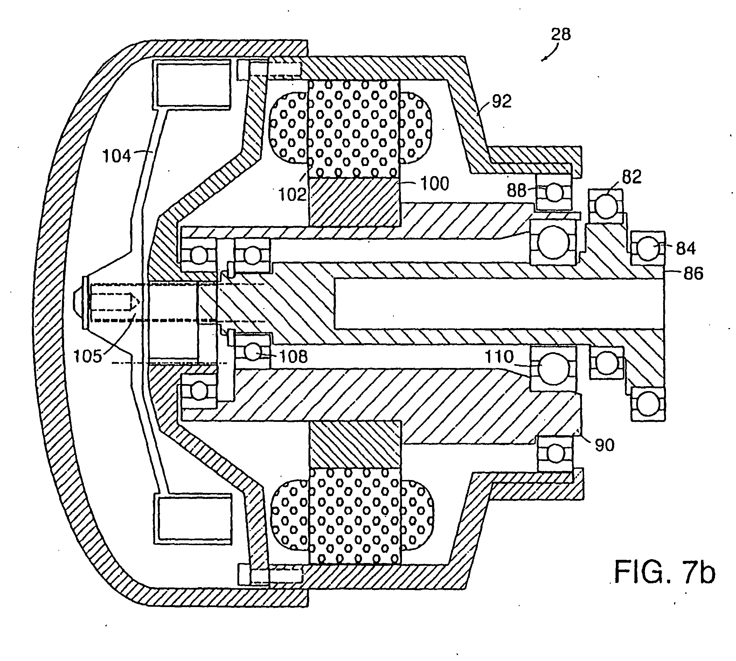

The cantilevered crankshaft configuration advantageously allows lubrication of gear set **98** without contamination of the Stirling engine working fluid which must be kept clean so as not to contaminate the regenerator and compromise the efficient operation of the engine. Primary crankshaft **90**, in turn, may impart torque to a mechanical load. An example of a mechanical load is generator rotor **100**, rotationally driven with respect to generator stator **102** for generating electrical energy. Eccentric flywheel **104** and linear counterweight **106** are coupled to eccentric crankshaft 86 and thus cantilevered about main bearing set **88**. Eccentric flywheel **104** is provided in order that the net angular momentum, including the rotational momentum of the forward rotating components and that of the backward-rotating components, is zero. Thus, vibration of the engine due to variations in engine speed are advantageously avoided. Eccentric flywheel 104 may, otherwise disposed than as shown in FIG. 7a. For example, referring to FIG. 7b, an alternate embodiment of the Stirling engine of Fig. 2 is shown in cross-section, wherein eccentric flywheel **104** is disposed at the end **105** of eccentric crankshaft **86** distal to the location of piston bearings **82** and **84**. Referring again to FIG. 7a, eccentric crankshaft **86** is supported with respect to primary crankshaft **90** by bearings **108** and **110**. A primary counterweight **112** and torsional counterweight **114** are provided for dynamic balance of primary crankshaft **90** with respect to the whole eccentric crankshaft assembly, including the pistons.

The load on primary crankshaft **90** preferentially does not change direction over the course of a cycle of the engine. In this way, by virtue of the balance of forward and backward inertia, torque reversal on epicyclic gear set **98** is advantageously prevented, thereby preventing noise and wear associated with gear backlash. If the load on the primary axle **90** is constant, the torque on epicyclic gear set **98** is unidirectional and is also minimized for a given net power output. If the applied load is an electric generator, constant torque operation also results in the highest generator efficiency. Additionally, the current load on the generator may be regulated, such as by load regulator **103** which may be a processor, as known in the electrical arts, for providing a constant torque on epicyclic gear set **98** for realizing the described advantageous operation. Additionally, generator rotor **100** may provide all or part of the mass of a flywheel, and the generator may also function as a starter for starting the engine.

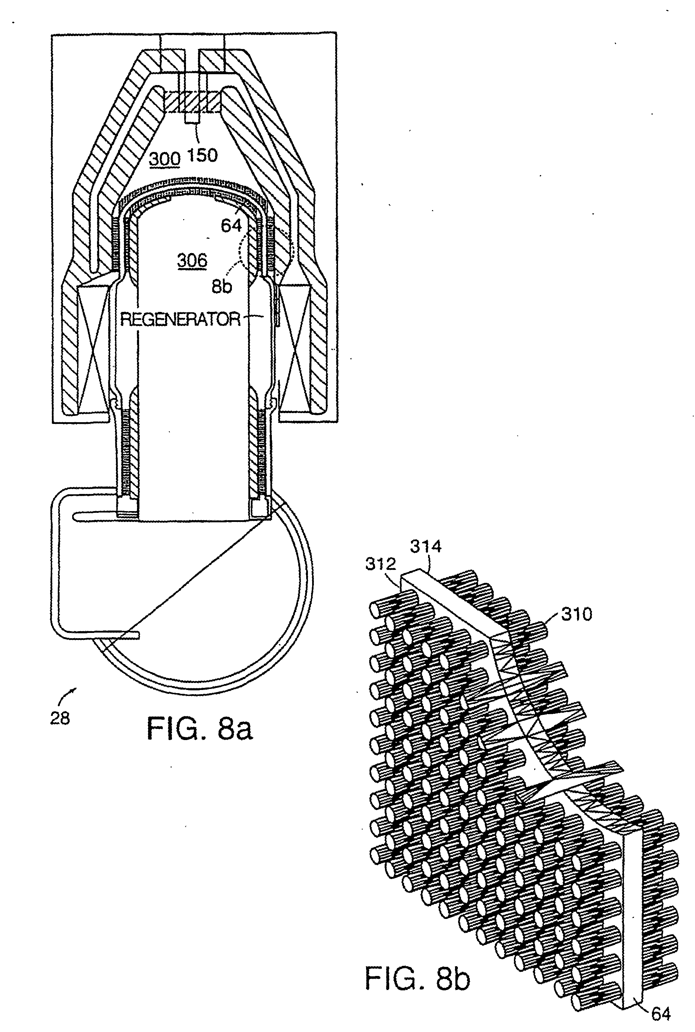

Referring now to FIGS. 8a and 8b, a structure is depicted, for transferring large amounts of heat from the combustion source to the interior of Stirling cycle engine **28**, shown in cross section. In order to increase the efficiency of heat transfer from hot gases **300**, generated by burner **150**, to the working fluid contained in the interior volume **306** of the engine, a large wetted surface area, on either side of heater head **64** is required. To achieve the high surface area, a large number of metal pins **310** are fabricated on both the interior surface **312** and exterior surface **314** of heater head **64**. Fabrication may be accomplished at low cost, such as by investment casting. Metal pins **310** not only increase the wetted surface area on either side of heater head **64** but also create turbulent wakes that increase fluid mixing and thereby further increase the flow of heat. This structure may also be employed for heat transfer at the cooler **68** (shown in FIG. 2) or in any application where efficient heat transfer is required between volumes of gases.

Referring to FIG. **9a,** a perspective view is shown of a system of header ducts **400** providing for the flow of working fluid between compression volume **38** and the annular region of fluid flow through the heat exchange network, namely past cooler head **68,** through regenerator **66** (shown in FIG. 2), and past heater head **64** (shown in FIG. 2). The annular flow of working fluid culminates at annular header **47** to which branching ducts **400** are coupled for creating equal-length flow passages between cylinder volume **38** and the entire annular region of header **47**. By substantially equalizing the flow impedance between every portion of the annular flow region and the cylinder volume, losses due to flow non-uniformities through the heat exchangers may be advantageously reduced, and, additionally, the flow of working fluid within a loop confined to the heat exchange region and thereby lost for purposes of mechanical work may be minimized. FIG. 9b shows a schematic of the system of branching ducts **400** of FIG. 9a, "unwrapped" into a planar view, showing the fluid communication via branching ducts -: **400** between compression space **38** and annular header **47**.

While Stirling engines are capable of providing high thermal efficiency and low emission of pollutants, these objectives impose requirements of thermal efficiency, in particular, on a burner employed to heat heater head 64 (shown in FIG. 2) of the Stirling engine. Components of such thermal efficiency include the efficient pumping of oxidant (typically, air, and, referred to herein and in any appended claims, without limitation, as "air") through the burner to provide combustion, and the recovery of hot exhaust leaving the heater head. In many applications, air (or other oxidant) is pre-heated, prior to combustion, nearly to the temperature of the heater head, so as to achieve the stated objectives of thermal efficiency.

In order to achieve low emissions, the fuel and air must be well-mixed with sufficient amounts of oxygen to limit the emission of carbon monoxide (CO) and, additionally, must be burned at low enough flame temperatures to limit the formation of oxides of nitrogen (NOₓ). The high temperature of preheated air, desirable for achieving high thermal efficiency, complicates achieving low-emission goals by making it difficult to premix the fuel and air and requiring large amounts of excess air in order to limit the flame temperature.

As used herein and in any appended claims, the term "auto-ignition temperature" is defined as the temperature at which a fuel will ignite without a temperature-decreasing catalyst under existing conditions of air and fuel pressure. The typical preheated air temperature exceeds the auto-ignition temperature of most fuels, potentially causing the fuel-air mixture to ignite before entering the combustion chamber. One solution to this problem is to use a non-premixed diffusion flame. However, since such diffusion flames are not well-mixed, higher than desirable emissions of CO and NOₓ result. A detailed discussion of flame dynamics is provided by Turns, *An Introduction to Combustion: Concepts and Applications*, (McGraw-Hill, 1996). Any increased air flow provided to limit flame temperatures typically increases the power consumed by an air pump or blower, thereby degrading overall engine efficiency.

In accordance with the present invention, low emissions and high efficiency may be provided by producing a pre-mixed flame even in the presence of air heated above the auto-ignition temperature of the fuel, and, additionally, by minimizing the pressure drop between the air inlet and the flame region, thereby minimizing blower power consumption, as now discussed.

The term "flame speed" is defined as the speed at which a flame front will propagate through a particular fuel-air mixture. Within the specification and the following claims, the term "combustion axis" shall refer to the direction of predominant fluid flow upon combustion of the fluid.

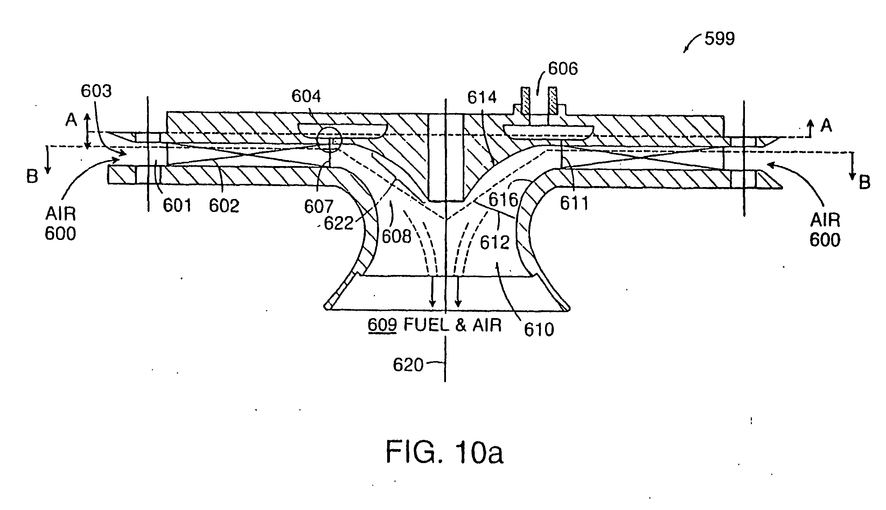

Referring now to FIGS. 10a-10c, an intake manifold **599** is shown for application to a Stirling cycle engine or other combustion application in accordance with an embodiment of the present invention. In accordance with a preferred embodiment of the invention, fuel is pre-mixed with air that may be heated above the fuel's auto-ignition temperature and a flame is prevented from forming until the fuel and air are well-mixed. FIG. 10a shows a preferred embodiment of the apparatus including an intake manifold **599** and a combustion chamber **610.** The intake manifold **599** has an axisymmetrical conduit **601** with an inlet **603** for receiving air **600.** Air **600** is pre-heated to a temperature, typically above 1000 K, which may be above the auto-ignition temperature of the fuel. Conduit **601** conveys air **600** flowing inward radially with respect to combustion axis **620** to a swirler **602** disposed within the conduit **601**.

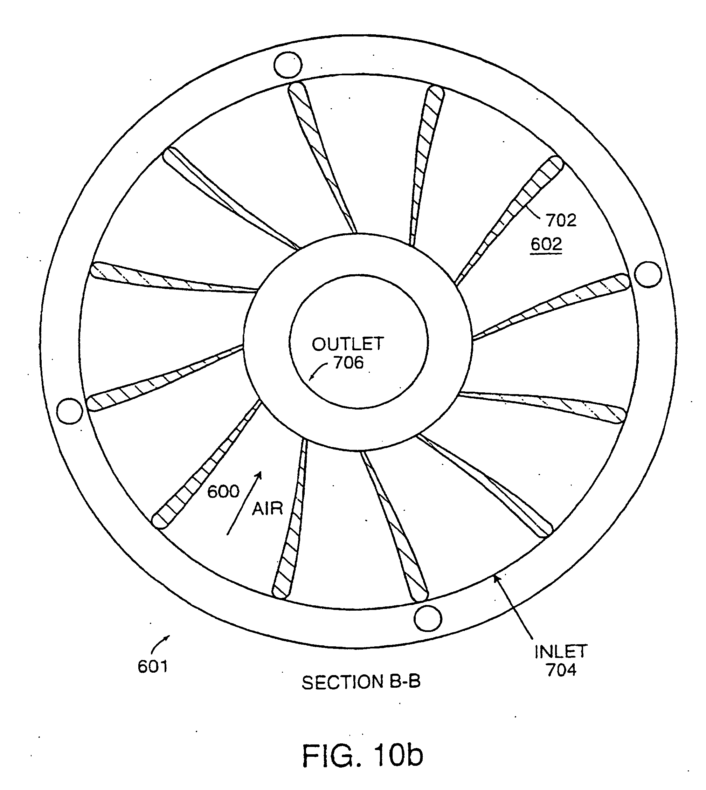

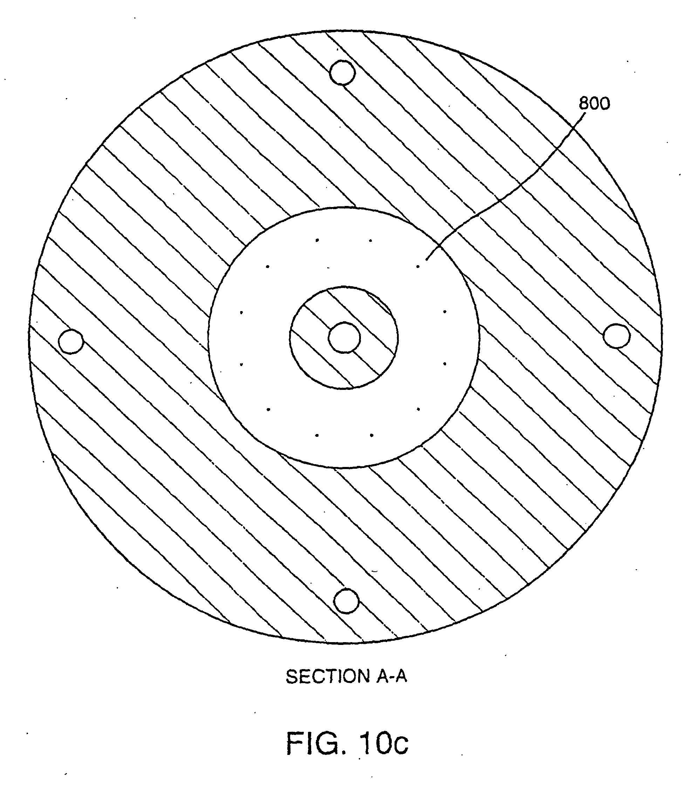

Fig. 10b shows a cross sectional view of the conduit **601** including swirler **602** in accordance with an embodiment of the invention. In the embodiment of FIG. 10b, swirler **602** has several spiral-shaped vanes **702** for directing the flow of air **600** radially inward and imparting a rotational component on the air. The diameter of the swirler section of the conduit decreases from the inlet **704** to the outlet **706** of swirler **602** as defined by the length of swirler vanes **702**. The decrease in diameter of swirler vanes **702** increases the flow rate of air **600** in substantially inverse proportion to the diameter. The flow rate is increased so that it is above the flame speed of the fuel. At outlet **706** of swirler **602**, fuel **606**, which in a preferred embodiment is propane, is injected into the inwardly flowing air.

In a preferred embodiment, fuel **606** is injected by fuel injector **604** through a series of nozzles **800** as shown in FIG. 10c. More particularly, FIG. 10c shows a cross sectional view of conduit **601** and includes the fuel jet nozzles **800**. Each of the nozzles **800** is positioned at the exit of the swirler vanes **702** and is centralized between two adjacent vanes. Nozzles **800** are positioned in this way for increasing the efficiency of mixing the air and fuel. Nozzles **800** simultaneously inject the fuel **606** across the air flow **600**. Since the air flow is faster than the flame speed, a flame will not form at that point even though the temperature of the air and fuel mixture is above the fuel's auto-ignition temperature. In a preferred embodiment, where propane is used, the preheat temperature, as governed by the temperature of the heater head, is approximately 1000 K.

Referring again to FIG. 10a, the air and fuel, now mixed, referred to hereafter as "air-fuel mixture" **609**, is transitioned in direction through a throat **608** which has a contoured fairing **622** and is attached to the outlet **607** of the conduit **601**. Throat **608** has an inner radius **614** and an outer dimension **616**. The transition of the air-fuel mixture is from a direction which is substantially transverse and radially inward with respect to combustion axis **620** to a direction which is substantially parallel to the combustion axis. The contour of the fairing **622** of throat **608** has the shape of an inverted bell such that the cross sectional area of throat **608** with respect to the combustion axis remains constant from the inlet **611** of the throat to outlet **612** of the throat. The contour is smooth without steps and maintains the flow speed from the outlet of the swirler to the outlet of the throat **608** to avoid separation and the resulting recirculation along any of the surfaces. The constant cross sectional area allows the air and fuel to continue to mix without decreasing the flow speed and causing a pressure drop. A smooth and constant cross section produces an efficient swirler, where swirler efficiency refers to the fraction of static pressure drop across the swirler that is converted to swirling flow dynamic pressure. Swirl efficiencies of better than 80% may typically be achieved by practice of the invention. Thus, the parasitic power drain of the combustion air fan may be minimized.

Outlet **612** of the throat flares outward allowing the air-fuel mixture **609** to disperse into the chamber **610** slowing the air-fuel mixture **609** thereby localizing and containing the flame and causing a toroidal flame to form. The rotational momentum generated by the swirler **602** produces a flame stabilizing ring vortex as well known in the art.

The devices and methods described herein may be applied in other applications besides the Stirling engine in terms of which the invention has been described. The described embodiments of the invention are intended to be merely exemplary and numerous variations and modifications will be apparent to those skilled in the art.

## Claims

1. An intake manifold (599) for combining air and a fuel for forming an air-fuel mixture for injection into a burner having a combustion axis, the air-fuel mixture having an auto-ignition temperature and a flame speed under a specified set of conditions, the intake manifold comprising:
a. a conduit (601 ) having an inlet (603) and an outlet (607) for conveying air (600) flowing radially inwardly with respect to the combustion axis, the flowing air (600) having a flow speed;
b. an air swirler (602) disposed within a fairing disposed between the conduit and the burner for imparting a rotational component on the radially inwardly flowing air, the air swirler (602) having an inlet diameter and an outlet diameter, the inlet diameter being greater than the outlet diameter such that the flow speed of the air is above the flame speed;
c. a fuel injector (604) for injecting fuel into the radially inwardly flowing air in such a manner that the air and fuel mix for forming an air fuel-mixture; and
d. a bell-shaped throat (608) having an inlet (611) in fluid communication with the outlet (607) of the conduit (601), the bell-shaped throat further having an outlet (612), the bell-shaped throat having a cross sectional contour such that the cross sectional area remains constant from inlet (611) to outlet (612).

## Patentansprüche

1. Ansaugsystem (599) zum Mischen von Luft und einem Kraftstoff, um ein Luft-/Kraftstoffgemisch zum Einspritzen in einen Brenner mit einer Verbrennungsachse zu bilden, wobei das Luft-/Kraftstoffgemisch eine Selbstentzündungstemperatur und eine Flammengeschwindigkeit bei einem vorgegebenen Satz von Bedingungen aufweist, und wobei das Ansaugrohr folgendes umfasst:
a. eine Leitung (601) mit einem Einlass (603) und einem Auslass (607) zum Leiten von bezüglich der Verbrennungsachse radial nach innen strömender Luft (600), wobei die strömende Luft (600) eine Strömungsgeschwindigkeit aufweist;
b. eine in einer zwischen der Leitung und dem Brenner angeordneten Verkleidung angeordnete Lufverwirbelungsvorrichtung (602), um der radial nach innen strömenden Luft eine Rotationskomponente zu verleihen, wobei die Luftverwirbelungsvorrichtung (602) einen Einlassdurchmesser und einen Auslassdurchmesser aufweist, wobei der Einlassdurchmesser größer ist als der Auslassdurchmesser, so dass die Strömungsgeschwindigkeit der Luft über der Flammengeschwindigkeit liegt;
c. eine Kraftstoff-Einspritzdüse (604) zum Einspritzen von Kraftstoff in die radial nach innen strömende Luft, derart, dass sich die Luft und der Kraftstoff zum Bilden eines Luft-/Kraftstoffgemischs vermischen; und
d. einen glockenförmigen Hals (608) mit einem Einlass (611), der mit dem Auslass (607) der Leitung (601) für Flüssigkeiten in Verbindung steht, wobei der glockenförmige Hals weiter einen Auslass (612) hat, und der glockenförmige Hals einen derartigen Querschnittsumriss aufweist, dass die Querschnittsfläche vom Einlass (611) zum Auslass (612) konstant bleibt.

## Revendications

1. Collecteur d'admission (599) pour combiner de l'air et un combustible afin de former un mélange air-combustible pour une injection dans un brûleur ayant un axe de combustion, le mélange air-combustible ayant une température d'auto-allumage et une vitesse de flamme dans un ensemble de conditions spécifiées, collecteur d'admission qui comprend :
a. un conduit (601) muni d'une arrivée (603) et d'une sortie (607) pour transporter de l'air (600) s'écoulant radialement vers l'intérieur relativement à l'axe de combustion, l'air s'écoulant (600) ayant une vitesse d'écoulement ;
b. un ensemble d'aubes de turbulence (602) disposé à l'intérieur d'un carénage disposé entre le conduit et le brûleur pour imprimer une composante de rotation à l'air s'écoulant vers l'intérieur radialement, l'ensemble d'aubes de turbulence (602) ayant un diamètre d'arrivée et un diamètre de sortie, le diamètre d'arrivée étant supérieur au diamètre de sorte que la vitesse d'écoulement de l'air est supérieure à la vitesse de la flamme ;
c. un injecteur de combustible (604) pour injecter du combustible dans l'air s'écoulant vers l'intérieur radialement d'une manière telle que l'air et le combustible se mélangent pour former un mélange air-combustible ; et
d. une gorge en forme de cloche (608) munie d'une arrivée (611) en communication pour les fluides avec la sortie (607) du conduit (601), la gorge en forme de cloche étant munie en outre d'une sortie (612), la gorge en forme de cloche ayant un contour en coupe transversale tel que la superficie de la section reste constante de l'arrivée (611) à la sortie (612).
